(19)

**Europäisches Patentamt**
**European Patent Office**
**Office européen des brevets**

(11)  **EP 4 542 807 A1**

(12)  **EUROPEAN PATENT APPLICATION**
published in accordance with Art. 153(4) EPC

(43) Date of publication:
**23.04.2025 Bulletin 2025/17**

(21) Application number: **23867502.9**

(22) Date of filing: **19.09.2023**

(51) International Patent Classification (IPC):
**H02J 3/00** *(2006.01)*   **H02J 3/06** *(2006.01)*

(52) Cooperative Patent Classification (CPC):
**H02J 3/00; H02J 3/06**

(86) International application number:
**PCT/CN2023/119724**

(87) International publication number:
**WO 2024/061215 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.09.2022  CN 202211142904**
**06.01.2023  CN 202310019374**

(71) Applicants:
• **NR Electric Co., Ltd**
**Nanjing, Jiangsu 211102 (CN)**
• **NR Engineering Co., Ltd.**
**Nanjing, Jiangsu 211102 (CN)**

• **NR Electric Power Electronics Co., Ltd.**
**Changzhou, Jiangsu 213000 (CN)**

(72) Inventors:
• **XIE, Yeyuan**
**Nanjing, Jiangsu 211102 (CN)**
• **WANG, Yu**
**Nanjing, Jiangsu 211102 (CN)**
• **LIU, Huancheng**
**Nanjing, Jiangsu 211102 (CN)**
• **YANG, Chen**
**Nanjing, Jiangsu 211102 (CN)**

(74) Representative: **Kurig, Thomas**
**Becker Kurig & Partner**
**Patentanwälte mbB**
**Bavariastraße 7**
**80336 München (DE)**

(54)  **FLEXIBLE ALTERNATING-CURRENT INTERCONNECTION APPARATUS AND STARTUP CONTROL METHOD**

(57)  The application provides a flexible alternating-current interconnection apparatus and a startup control method. The flexible alternating-current interconnection apparatus comprises: interconnection converter chains for three phases, and an energy supply unit, the interconnection converter chain for each phase comprising N power balance sub-modules, M first-type full-bridge sub-modules and a reactor, wherein each of the power balance sub-module comprises a second full-bridge circuit, a second direct-current capacitor and a first bridge circuit, each of the first-type full-bridge sub-module comprises a first direct-current capacitor and a first full-bridge circuit, and the direct-current ends of the first full-bridge circuit are connected with the first direct-current capacitor in parallel; the alternating-current ends of the first bridge circuits in the interconnection converter chain for each phase are connected with the energy supply unit, such that the energy supply unit performs a power exchange with the power balance sub-modules in the interconnection converter chain for each phase; where M is greater than 0, the alternating-current ends of the second full-bridge circuits in the interconnection converter chain for each phase and the alternating-current ends of the first full-bridge circuits thereof are connected with the reactor in series to form a series branch; an one end of the series branch is connected with a first alternating-current power grid, and another end of the series branch is connected with a second alternating-current power grid.

Fig. 1

EP 4 542 807 A1

## Description

Technical Field

The present application relates to the technical field of alternating-current power transmission, in particular to a flexible alternating-current interconnection apparatus and a startup control method.

Background

As users' demands for power quality, electricity consumption, and power supply reliability continue to rise, the use of power systems for closed-loop power supply operation has become increasingly widespread.

The closed-loop operation mode of power systems is based on a dual-source power supply approach, which involves a network formed by connecting lines, transformers, or circuit breakers in a closed loop. The benefits of closed-loop operation in the power grid include mutual assistance and support between grids, allowing for load adjustment and backup. This not only enhances the reliability of the power grid or supply but further ensures the electricity supply for critical loads. However, the conditions for closed-loop operation are quite stringent, requiring that the voltage magnitudes and phases of the two power sources be nearly identical to prevent overload of components within the loop. In practical systems, however, due to the distribution of system impedance or the transformer connection configurations, there are actual differences in magnitude and phase angle between the two power sources. Direct interconnection of the two power sources may result in over current.

The prior art has proposed solutions for flexible interconnection using power electronic converters. For example, an AC-DC-AC converter is used to connect the alternating-current buses of two power sources, with two back-to-back converters separated by direct-current isolation. The alternating-current side can regulate the alternating-current voltage magnitude and phase separately, allowing for flexible interconnection. However, this solution is relatively expensive, requiring two sets of back-to-back full-power converters for rectification and inversion, making the cost-effectiveness of parallel flexible interconnection solutions low.

The above information disclosed in the background art section is only used to enhance the understanding of the background of the invention, so it may contain information that does not constitute the prior art known to those of ordinary skill in the art.

Summary

To address the above issue, the present application provides a flexible alternating-current interconnection apparatus and a startup control method.

According to a first aspect of the present application, a flexible alternating-current interconnection apparatus is provided, comprising:interconnection converter chains for three phases, and an energy supply unit, the interconnection converter chain for each phase comprising N power balance sub-modules, M first-type full-bridge sub-modules and a reactor, N being an integer greater than or equal to 1, and M being an integer greater than or equal to 0, wherein each of the power balance sub-module comprises a second full-bridge circuit, a second direct-current capacitor and a first bridge circuit, and the direct-current ends of the second full-bridge circuit, the second direct-current capacitor and the direct-current ends of the first bridge circuit are connected in parallel; each of the first-type full-bridge sub-module comprises a first direct-current capacitor and a first full-bridge circuit, and the direct-current ends of the first full-bridge circuit are connected with the first direct-current capacitor in parallel; the alternating-current ends of the first bridge circuits in the interconnection converter chain for each phase are connected with the energy supply unit, such that the energy supply unit performs a power exchange with the power balance sub-modules in the interconnection converter chain for each phase; where M is 0, the alternating-current ends of the second full-bridge circuits in the interconnection converter chain for each phase are connected with the reactor in series to form a series branch; where M is greater than 0, the alternating-current ends of the second full-bridge circuits in the interconnection converter chain for each phase and the alternating-current ends of the first full-bridge circuits thereof are connected with the reactor in series to form a series branch; and an end of the series branch is connected with a first alternating-current power grid, and another end of the series branch is connected with a second alternating-current power grid.

According to some embodiments, the energy supply unit comprises at least one multi-winding transformer, a primary winding of the multi-winding transformer is connected with an alternating-current power source, a secondary winding of the multi-winding transformer is connected with the alternating-current ends of the first bridge circuits of the interconnection converter chain for each phase, and a total number of the secondary windings of the multi-winding transformer is 3N.

According to some embodiments, the energy supply unit comprises 3N isolation conversion units, each of the isolation conversion units is connected with one of the power balance sub-modules, each of the isolation conversion units comprises a high-frequency transformer, a second bridge circuit, and a third direct-current capacitor, primary sides of the high-frequency transformer are connected with the alternating-current ends of the first bridge circuit, secondary sides of the high-frequency transformer are connected with the alternating-current ends of the second bridge circuit, and the direct-current ends of the second bridge circuit are connected with the third direct-current capacitor in parallel.

According to some embodiments, the energy supply unit comprises at least one low-voltage direct-current power source, and direct-current output ends of the low-voltage direct-current power source are connected with the third direct-current capacitors of the isolation conversion units in parallel, respectively.

According to some embodiments, the energy supply unit further comprises energy supply converter chains for three phases, the energy supply converter chain for each phase comprises N third full-bridge circuits and K second-type full-bridge sub-modules, and K is an integer greater than or equal to 0; the energy supply converter chains for three phases are connected with an alternating-current power source in a star or delta configuration; each of the second-type full-bridge sub-modules comprises a fourth direct-current capacitor and a fourth full-bridge circuit, and the fourth direct-current capacitor is connected with direct-current ends of the fourth full-bridge circuit in parallel; the alternating-current ends of the third full-bridge circuits of the energy supply converter chain for each phase are connected with the alternating-current ends of the fourth full-bridge circuits in series; and each of the third full-bridge circuits has a direct-current end connected with the third direct-current capacitor of a corresponding isolation conversion unit.

According to some embodiments, alternating-current switches are required to connect the energy supply unit with both the first alternating-current grid and the second alternating-current grid; the multi-winding transformer comprises at least one primary winding, the primary winding of the multi-winding transformer is connected with the first alternating-current grid via a first alternating-current switch, and the primary winding is connected with the second alternating-current grid via a second alternating-current switch; and the first alternating-current switch connected with the first alternating-current grid and the second alternating-current switch connected with the second alternating-current grid are not allowed to be closed at a same time.

According to some embodiments, the first bridge circuit comprises a single-phase full-bridge circuit or a three-phase half-bridge circuit.

According to some embodiments, any one of the interconnection converter chains for three phases is connected with a short-circuit switch in parallel; and/or the alternating-current ends of any one of the N power balance sub-modules are connected with a bypass switch in parallel.

According to some embodiments, the flexible alternating-current interconnection apparatus further comprises an overvoltage protection apparatus, connected between two ends of a series branch of the first-type full-bridge sub-module and the power balance sub-module of the interconnection converter chain for each phase in parallel, and/or between either end and ground in series.

According to some embodiments, a number of the power balance sub-modules required for the flexible alternating-current interconnection apparatus is determined as follows:

$$N \geq \sqrt{2} \frac{\sqrt{U_1^2 + U_2^2 - 2U_1U_2\cos\gamma}}{U_{dc}} ;$$

$$N \geq \frac{Max(\sqrt{2}U_1, \sqrt{2}U2)}{U_{dc}}$$

; where $V_{dc}$ is a rated direct-current voltage of the power balance sub-module; $U_1$ is an effective value of a phase voltage at an end of the interconnection converter chains for three phases; $U_2$ is an effective value of a phase voltage at another end of the interconnection converter chains for three phases; and $\gamma$ is a phase angle difference between $U_1$ and $U_2$.

According to some embodiments, the flexible alternating-current interconnection apparatus further comprises a shift switch unit, wherein the shift switch unit comprises a three-phase isolating switch and two inter-phase switches; the three-phase isolating switch is connected between the interconnection converter chains for three phases and the first alternating-current grid in series, or between the interconnection converter chains for three phases and the second alternating-current grid in series; and the two inter-phase switches are connected between the three-phase isolating switch and same-side ports of the interconnection converter chains for three phases, and the two inter-phase switches are bridged across the interconnection converter chains for different phases.

According to a second aspect of the present application, a startup control method for the flexible alternating-current interconnection apparatus as described in the first aspect is provided, comprising: starting the energy supply unit so that a direct-current voltage of the third direct-current capacitor of the isolation conversion unit is above a first startup threshold; where the direct-current voltage of the third direct-current capacitor of the isolation conversion unit is above the first startup threshold, unlocking a power semiconductor device in the isolation conversion unit for operation to control the second full-bridge circuit of the power balance sub-module to output an alternating-current voltage, so that a voltage of the first direct-current capacitor of the first-type full-bridge sub-module reaches a second startup threshold; and where the voltage of the first direct-current capacitor of the first-type full-bridge sub-module reaches the second startup threshold, unlocking a power semiconductor device in the first-type full-bridge sub-module for operation.

According to some embodiments, wherein where the flexible alternating-current interconnection apparatus is connected between two alternating-current grids and the energy supply unit comprises energy supply converter chains for three phases, starting the energy supply unit comprises: where an alternating-current power source connected with an end of the energy supply converter chains for three phases is energized first, during startup of the energy supply unit, the energized alternating-current grid directly charges the second-type full-bridge sub-module and the third direct-current capacitor in the third full-bridge circuits; and where an alternating-current power source not connected with an end of the energy supply converter chains for three phases is energized first, during startup of the energy supply unit, the energized alternating-current grid simultaneously charges the second direct-current capacitor of the power balance sub-module, the first direct-current capacitor of the first-type full-bridge sub-module, the fourth direct-current capacitor of the second-type full-bridge sub-module, and the third full-bridge circuits.

According to the flexible alternating-current interconnection apparatus and the startup control method, the flexible alternating-current interconnection apparatus is connected between two alternating-current power sources, which originate from power systems in the same or nearby regions. The phase angle and magnitude differences between the two power sources are small. By adjusting the output voltage of the flexible alternating-current interconnection apparatus, the magnitude and phase of the voltage applied across the reactor can be altered, resulting in adjustable current in the reactor and enabling flexible control of transmission power between the two alternating-current power sources. Additionally, due to the small voltage difference between the two power sources, the actual equipment operates under lower voltage, leading to significant advantages in operational losses, equipment footprint, and overall costs.

The technical scheme provided in this application involves the interconnection converter chains for three phases and an energy supply unit. The interconnection converter chains for three phases comprise power balance sub-modules and first-type full-bridge sub-modules. The first-type full-bridge sub-module serves to support voltage, while the power balance sub-module regulates the transmission power. The combination of the two ensures performance while further reducing costs.

The energy supply unit provided in this application comes in various forms, comprising multi-winding transformer supply, energy supply converter chain supply, and low-voltage direct-current supply methods, making it suitable for different system applications and voltage levels.

It should be understood that the above general description and the following detailed description are only exemplary, and do not limit the application.

Brief Description of the Drawings

The above and other objects, features and advantages of the application will become more apparent by describing in detail exemplary embodiments with reference to the accompanying drawings. The drawings described below are only some embodiments of the application, and do not limit the application.

Fig. 1 is a diagram of a flexible alternating-current interconnection apparatus according to an exemplary embodiment;
Fig. 2 is a diagram of a first-type full-bridge sub-module according to an exemplary embodiment;
Fig. 3A is a diagram of a first bridge circuit according to an exemplary embodiment;
Fig. 3B shows another embodiment of an exemplary diagram of a first bridge circuit;
Fig. 4A is a wiring diagram of a multi-winding transformer according to an exemplary embodiment;
Fig. 4B shows another embodiment of an exemplary wiring diagram of a multi-winding transformer;
Fig. 4C shows yet another embodiment of an exemplary wiring diagram of a multi-winding transformer;
Fig. 4D shows still another embodiment of an exemplary wiring diagram of a multi-winding transformer;
Fig. 5A shows another embodiment of an exemplary overall topology diagram of a flexible alternating-current closed-loop apparatus;
Fig. 5B shows yet another embodiment of an exemplary overall topology diagram of a flexible alternating-current closed-loop apparatus;
Fig. 6 shows still another embodiment of an exemplary overall topology diagram of a flexible alternating-current closed-loop apparatus;
Fig. 7 is a diagram of a precharging unit according to an exemplary embodiment;
Fig. 8 is a topology diagram of a converter chain according to an exemplary embodiment;
Fig. 9 shows another embodiment of an exemplary diagram of a flexible alternating-current interconnection apparatus;
Fig. 10 is a diagram of an isolation conversion unit according to an exemplary embodiment;
Fig. 11 is a diagram of a rectifier bridge according to an exemplary embodiment;
Fig. 12 shows yet another embodiment of an exemplary diagram of a flexible alternating-current interconnection apparatus;
Fig. 13 is a diagram of a third full-bridge circuits according to an exemplary embodiment;
Fig. 14 is a diagram of a second-type full-bridge sub-module according to an exemplary embodiment;
Fig. 15 is an overall diagram of a flexible alternating-current interconnection apparatus according to an exemplary embodiment;
Fig. 16 is a topology diagram of a flexible alternating-current interconnection apparatus according to an exemplary embodiment;
Fig. 17 is a voltage and current vector diagram according to an exemplary embodiment;
Fig. 18A is a topology diagram of a flexible alternating-current interconnection apparatus combined with a static var generator (SVG) according to an exemplary embodiment;

Fig. 18B shows another embodiment of an exemplary topology diagram of a flexible alternating-current interconnection apparatus combined with a SVG.

Detailed Description of Embodiments

Exemplary embodiments will be described more fully below with reference to the accompanying drawings. However, the exemplary embodiments can be implemented in various forms and should not be construed as limited to the embodiments set forth herein. These embodiments are provided to make this application more thorough and complete, and to fully convey the concept of the exemplary embodiments to those skilled in the art. In the drawings, the same reference numerals refer to the same or similar parts, so repeated descriptions will be omitted.

The described features, structures, or characteristics may be combined in any suitable manner in one or more embodiments. In the following description, numerous specific details are provided to give a thorough understanding of the embodiments of the disclosure. However, those skilled in the art will realize that the technical solution of the disclosure can be practiced without one or more of these specific details, or other ways, components, materials or devices can be adopted. In these cases, well-known structures, methods, devices, implementations, materials or operations will not be shown or described in detail.

The flowchart shown in the drawings is only an exemplary illustration, and does not necessarily comprise all contents and operations/steps, nor does it have to be executed in the described order. For example, some operations/steps can be decomposed, while others can be merged or partially merged, so the actual execution order may change according to the actual situation.

Terms such as "first" and "second" in the specification and claims of this application and the drawings are used to distinguish different objects, but not to describe a specific order. Further, the terms "comprise" and "have" and any variations thereof are intended to cover non-exclusive inclusion. For example, a process, method, system, product or device comprising a series of steps or units is not limited to the listed steps or units, but optionally comprises steps or units not listed, or optionally comprises other steps or units inherent to the process, method, product or device.

Those skilled in the art can understand that the drawings are only diagrams of the exemplary embodiments. The modules or processes in the drawings are not necessarily a must for the implementation of this application, so they cannot be used to limit the scope of protection of this application.

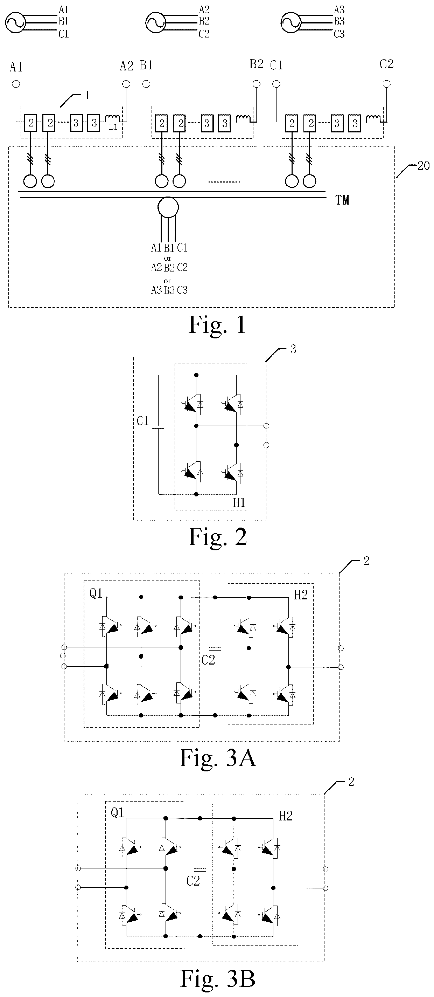

Fig. 1 is a diagram of a flexible alternating-current interconnection apparatus according to an exemplary embodiment.

Referring to Fig. 1, the flexible alternating-current interconnection apparatus comprises interconnection converter chains for three phases 1, and an energy supply unit 20, interconnection converter chain for each phase comprises M first-type full-bridge sub-modules 3, N power balance sub-modules 2, and a reactor L1, M being an integer greater than or equal to 0, and N being an integer greater than or equal to 1, wherein each of the first-type full-bridge sub-module 3 comprises a first direct-current capacitor C1 and a first full-bridge circuit H1, and the direct-current ends of the first full-bridge circuit H1 are connected with the first direct-current capacitor C1 in parallel, as shown in Fig. 2; and each of the power balance sub-module 2 comprises a second full-bridge circuit H2, a second direct-current capacitor C2 and a first bridge circuit Q1, and the direct-current ends of the second full-bridge circuit H2, the second direct-current capacitor C2 and the direct-current ends of the first bridge circuit Q1 are connected in parallel.

According to some embodiments, the flexible alternating-current interconnection apparatus proposed in this application is connected between two alternating-current bus sections. In practical systems, although there may be voltage and phase angle differences between two power sources, the differences are generally small. The converter chain only experiences the voltage difference between the two alternating-current power sources, and during steady-state operation, the flexible alternating-current interconnection apparatus does not require full-capacity connection, resulting in minimal losses.

According to some embodiments, the first bridge circuit Q1 may be a single-phase full-bridge circuit or a three-phase half-bridge circuit. Fig. 3A illustrates an embodiment where the first bridge circuit Q1 is a three-phase half-bridge circuit, while Fig. 3B shows an embodiment where the first bridge circuit Q1 is a single-phase full-bridge circuit. It is preferred to use fully controlled power devices, which can achieve four-quadrant operation. The power balance sub-module may obtain bidirectional active power support through the first bridge circuit Q1 and further regulate reactive power on the alternating-current side, providing an energy source for the converter chain of the flexible alternating-current interconnection apparatus to facilitate flexible control of active and reactive power.

According to an exemplary embodiment, the alternating-current ends of the first full-bridge circuits H1 in hte interconnection converter chain for each phase and the alternating-current ends of the second full-bridge circuits H2 thereof are connected with the reactor L1 in series to form a series branch; an end of the series branch is connected with a first alternating-current power grid, as shown as A1, B1, and C1 in Fig. 1; another end of the series branch is connected with a second alternating-current power grid, as shown as A2, B2, and C2 in Fig. 1. One end of the series branch is connected with the first alternating-current grid directly or via a first isolation transformer, and the other end is connected with the second alternating-current grid directly or via a second isolation transformer. According to some embodiments, the first isolation transformer and/or the second isolation transformer may be a three-winding transformer or a two-winding transformer.

According to an exemplary embodiment, the alternating-current ends of the first bridge circuits Q1 in the interconnection converter chain for each phase are connected with the energy supply unit 20, such that the energy supply unit 20 performs a power exchange with the power balance sub-modules 2 in the interconnection converter chain for each phase.

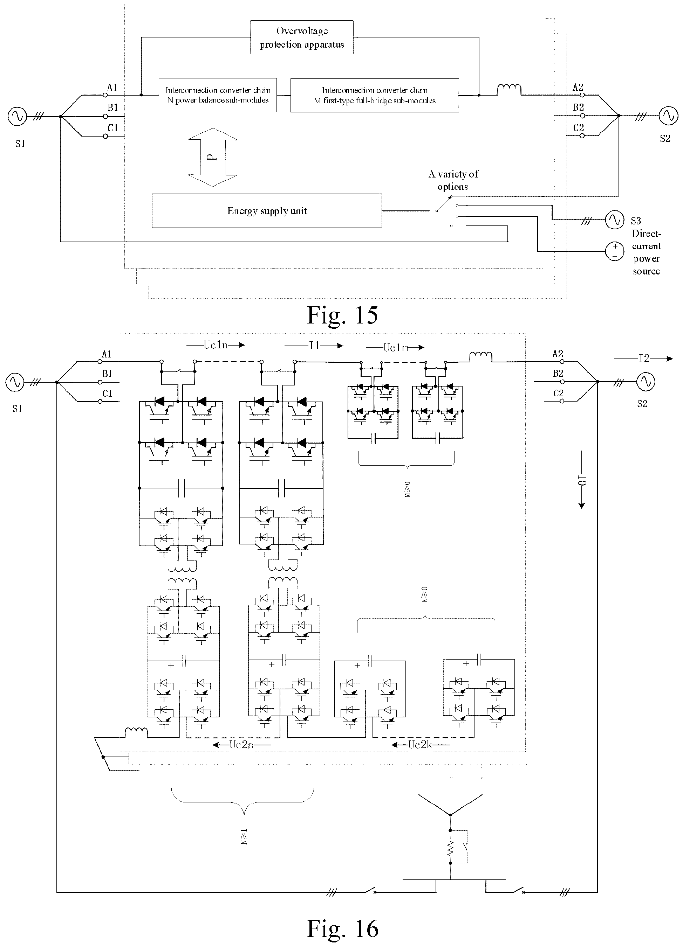

According to an exemplary embodiment, the flexible alternating-current interconnection apparatus further comprises an overvoltage protection apparatus which is connected in parallel between two ends of a series branch of the first-type full-bridge sub-module in the interconnection converter chain for each phase and the power balance sub-module, as shown in Fig. 15; and/or in series between either end and ground.

According to an exemplary embodiment, the first full-bridge circuit H1 and the second full-bridge circuit H2 each comprise a bridge circuit formed by four sets of power semiconductor devices, with a midpoint of the bridge circuit serving as the alternating-current end of the second full-bridge circuit H2. The alternating-current ends of the first full-bridge circuit H1 and the second full-bridge circuit H2 are connected in a cascaded configuration.

According to an exemplary embodiment, interconnection converter chain for each phase is further connected in series with the reactor L1. The reactor L1 may be positioned at one end of the of interconnection converter chains for three phases or split into two parts located at two ends of the interconnection converter chains. By adjusting the output voltage of the flexible alternating-current interconnection apparatus, the magnitude and phase of the voltage applied across the reactor L1 can be altered, resulting in adjustable current in the reactor L1 and enabling flexible control of both active and reactive transmission power between the two alternating-current power sources.

According to an exemplary embodiment, the energy supply unit 20 comprises at least one multi-winding transformer TM, a primary winding of the multi-winding transformer TM is connected with an alternating-current power source, a secondary winding of the multi-winding transformer TM is connected with the alternating-current ends of the first bridge circuits Q1 in the interconnection converter chain for each phase, and a total number of the secondary windings of the multi-winding transformer TM is 3N.

According to an exemplary embodiment, taking N=2 as an example, the interconnection converter chain for each phase comprises 2 power balance sub-modules, resulting in a total of 6 power balance sub-modules in the interconnection converter chains for three phases. The energy supply unit comprises 1 multi-winding transformer, with the number of secondary windings in the multi-winding transformer matching the number of the power balance sub-modules, which is further 6. The 6 independent secondary windings provide energy to the power balance sub-modules.

According to some embodiments, the alternating-current power source connected with the energy supply unit is either the first alternating-current grid and/or the second alternating-current grid, or a third alternating-current grid. The connection method may be direct connection, connection through alternating-current switches, and/or connection via isolation transformers.

For example, the multi-winding transformer TM is connected with the first alternating-current grid through a secondary winding of the first isolation transformer T1, and/or to the second alternating-current grid through a secondary winding of the second isolation transformer T2. The first isolation transformer T1 and/or the second isolation transformer T2 are three-winding transformers or two-winding transformers. The primary windings of the first and second isolation transformers are defined as the windings connected with the alternating-current grid S1 or S2, while the secondary windings are defined as the windings connected with the converter chain 1. When the first and second isolation transformers T1 and T2 are three-winding transformers, an additional winding is defined as a third winding.

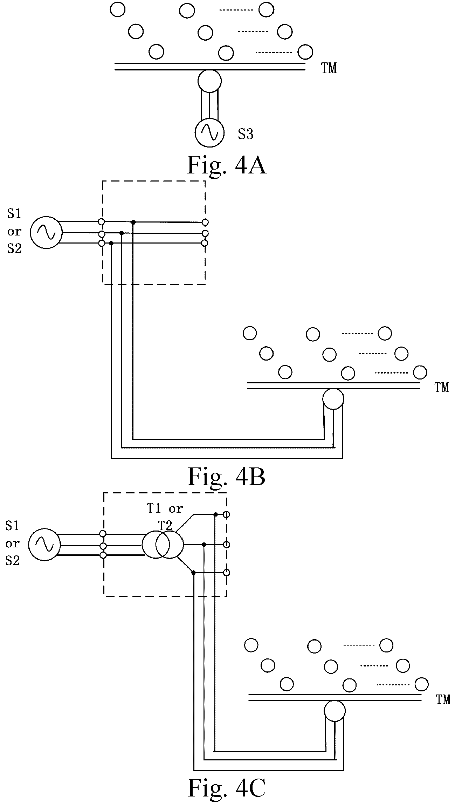

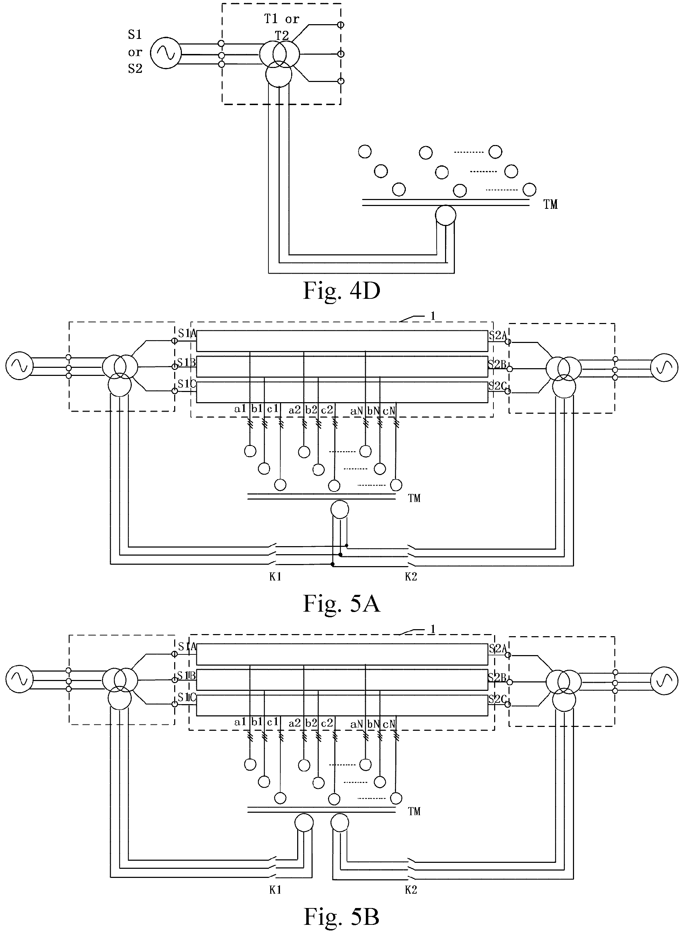

According to some embodiments, the connection method for the primary winding of the multi-winding transformer TM comprises: connecting to the third alternating-current grid S3, as shown in Fig. 4A; or connecting to the first alternating-current grid S1, as shown in Fig. 4B; or connecting to the secondary winding of the first isolation transformer T1, as shown in Fig. 4C; or connecting to the third winding of the first isolation transformer T1, as shown in Fig. 4D; or connecting to the second alternating-current grid S2, as shown in Fig. 4B; or connecting to the secondary winding of the second isolation transformer T2, as shown in Fig. 4C; or connecting to the third winding of the second isolation transformer T2, as shown in Fig. 4D.

This application introduces an energy supply circuit based on the multi-winding transformer TM and the first bridge circuit. The multi-winding transformer TM connects the alternating-current power source through the primary winding, providing a stable and isolated alternating-current voltage source for the first bridge circuit. The application offers multiple connection methods to accommodate various connection configurations between the alternating-current grid and the flexible alternating-current interconnection apparatus.

According to some embodiments, 1 multi-winding transformer TM is provided; where the energy supply unit being connected with both the first alternating-current grid and the second alternating-current grid, connections through alternating-current switches are required separately, and the number of the primary windings is 1 or 2:

when there is 1 primary winding, the primary winding of the multi-winding transformer TM is connected through a first alternating-current switch K1 to the first alternating-current grid S1, or to the secondary winding of the first isolation transformer T1, or to the third winding of the first isolation transformer T1; meanwhile, the primary winding is connected through a second alternating-current switch K2 to the second alternating-current grid S2, or to the secondary winding of the second isolation transformer T2, or to the third winding of the second isolation transformer T2, as shown in Fig. 5A;

when there are 2 primary windings, the first primary winding of the multi-winding transformer TM is connected through the first alternating-current switch K1 to the first alternating-current grid S1, or to the secondary winding of the first isolation transformer T1, or to the third winding of the first isolation transformer T1; and the second primary winding is connected through the second alternating-current switch K2 to the second alternating-current grid S2, or to the secondary winding of the second isolation transformer T2, or to the third winding of the second isolation transformer T2, as shown in Fig. 5B.

According to some embodiments, where the energy supply unit being connected with both the first alternating-current grid and the second alternating-current grid, the first alternating-current switch K1 connected with the first alternating-current grid and the second alternating-current switch K2 connected with the second alternating-current grid are not allowed to be closed at a same time.

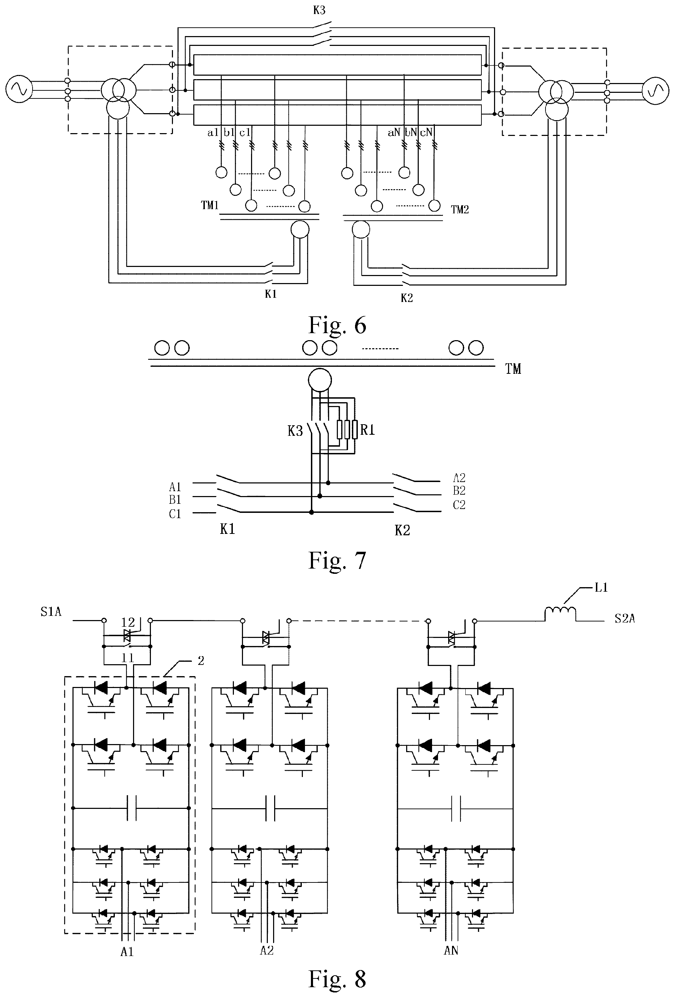

According to some embodiments, there are 2 multi-winding transformers TM, and each multi-winding transformer comprises one primary winding, as shown in Fig. 6: the primary winding of a first multi-winding transformer TM1 is connected through the first alternating-current switch K1 to the first alternating-current grid S1, or to the secondary winding of the first isolation transformer T1, or to the third winding of the first isolation transformer T1; the primary winding of a second multi-winding transformer TM2 is connected through the second alternating-current switch K2 to the second alternating-current grid S2, or to the secondary winding of the second isolation transformer T2, or to the third winding of the second isolation transformer T2.

In the interconnection converter chains for three phases, the alternating-current ends of part of the power balance sub-modules are connected with the secondary windings of the first multi-winding transformer TM1, while the alternating-current ends of the other part of the power balance sub-modules are connected with the secondary windings of the second multi-winding transformer TM2. The alternating-current ends of L first bridge circuits in the interconnection converter chain for each phase are connected with the secondary windings of the first multi-winding transformer, while the alternating-current ends of N-L first bridge circuits are connected with the secondary windings of the second multi-winding transformer.

According to some embodiments, the interconnection converter chain for each phase is further connected in parallel to a short-circuit switch K3.

According to some embodiments, the number of the multi-winding transformers TM is i (i≥2), each multi-winding transformer comprises 1 primary winding, and the i multi-winding transformers TM comprise 3*N secondary windings.

According to some embodiments, the flexible alternating-current interconnection apparatus further comprises a precharging unit which comprises a precharging switch K3 and a precharging resistor R1 connected in parallel. The precharging unit is integrated into a primary winding circuit of the multi-winding transformer TM, as shown in Fig. 7. By first opening the precharging switch K3, the power source can be connected through the precharging resistor R1, preventing any shock to the multi-winding transformer TM when the power source is directly connected.

According to some embodiments, the number of power balance sub-modules required to connect to the flexible alternating-current interconnection apparatus needs to meet the following conditions:

$$N \geq \sqrt{2}\frac{\sqrt{U_1^2 + U_2^2 - 2U_1U_2\cos\gamma}}{U_{dc}}$$

$$N \geq \frac{\text{Max}(\sqrt{2}U_1, \sqrt{2}U_2)}{U_{dc}}$$

where N is the number of power balance sub-modules required to connect to the flexible alternating-current interconnection apparatus; $V_{dc}$ is a rated direct-current voltage of the power balance sub-module; $U_1$ is an effective value of a phase voltage at an end of the interconnection converter chains for three phases; $U_2$ is an effective value of a phase voltage at another end of the interconnection converter chains for three phases; and $\gamma$ is a phase angle difference between $U_1$ and $U_2$.

According to some embodiments, as shown in Fig. 8, the alternating-current ends of the power balance sub-modules are connected in parallel to a bypass switch 11. The bypass switch can be controlled to open and close, and further has a self-holding function in the event of a power outage.

According to some embodiments, as shown in Fig. 8, the alternating-current ends of the power balance sub-modules are connected in parallel to a bidirectional solid-state switch 12. The bidirectional solid-state switch 12 comprises power semiconductor devices which allow bidirectional current flow, and the bidirectional solid-state switch 12 conducts in the event of overvoltage of the direct-current capacitor of the sub-module.

According to an exemplary embodiment, the bidirectional solid-state switch 12 comprises anti-paralleled thyristors; however, this application is not limited to this configuration.

An embodiment is used to illustrate the implementation of the application.

The flexible alternating-current interconnection apparatus is connected between the first and second alternating-current grids S1 and S2, with the effective voltage of power lines being 220 kV. The transformation ratio of the isolation transformers T1 and T2 is 220 kV/35 kV, and the effective phase voltage at both ends in the interconnection converter chain for each phase is

$$\frac{35\text{kV}}{\sqrt{3}}$$

, approximately 20 kV. Assuming that the angle between two ends of the power source is 30° and the rated direct-current voltage of the power balance sub-module is 2.2 kV, the number of the power balance sub-modules is calculated.

Based on the conditions:

$$N \geq \sqrt{2}\frac{\sqrt{U_1{}^2 + U_2{}^2 - 2U_1U_2\cos\gamma}}{U_{dc}} \quad ;$$

N≥6.65 is derived;

$$N \geq \frac{\text{Max}(\sqrt{2}U_1, \sqrt{2}U_2)}{U_{dc}} \quad ;$$

N≥12.86 is derived;

Thus, the minimum number of power balance sub-modules required to connect to the flexible alternating-current interconnection apparatus is 13. The total number of secondary windings needed for the multi-winding transformers TM is 13 × 3 = 39. One option is to provide two multi-winding transformers TM1 and TM2, with 18 and 21 secondary windings, respectively; alternatively, a single multi-winding transformer TM is adopted, which has 39 secondary windings.

According to the flexible alternating-current interconnection apparatus, the flexible alternating-current interconnection apparatus is connected between two alternating-current power sources, which originate from power systems in the same or nearby regions. The phase angle and magnitude differences between the two power sources are small. By adjusting the output voltage of the flexible alternating-current interconnection apparatus, the magnitude and phase of the voltage applied across the reactor can be altered, resulting in adjustable current in the reactor and enabling flexible control of transmission power between the two alternating-current power sources. Additionally, due to the small voltage difference between the two power sources, the actual equipment operates under lower voltage, leading to significant advantages in operational losses, equipment footprint, and overall costs.

The technical scheme provided in this application involves the interconnection converter chains for three phases and an energy supply unit. The interconnection converter chains for three phases comprise power balance sub-modules and first-type full-bridge sub-modules. The first-type full-bridge sub-module serves to support voltage, while the power balance sub-module regulates the transmission power. The combination of the two ensures performance while further reducing costs.

The energy supply unit provided in this application comes in various forms, comprising multi-winding transformer supply, energy supply converter chain supply, and low-voltage direct-current supply methods, making it suitable for different system applications and voltage levels.

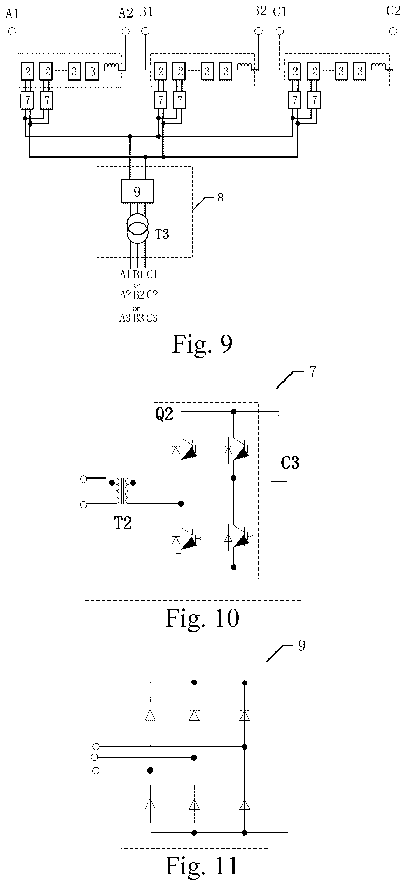

Fig. 9 shows another embodiment of an exemplary diagram of a flexible alternating-current interconnection apparatus.

As shown in Fig. 9, the energy supply unit comprises 3N isolation conversion units 7, and each of the isolation conversion units 7 is connected with one of the power balance sub-modules 2; and each of the isolation conversion units 7 comprises a high-frequency transformer T2, a second bridge circuit Q2, and a third direct-current capacitor C3, the primary sides of the high-frequency transformer T2 are connected with the alternating-current ends of the first bridge circuit Q1, the secondary sides of the high-frequency transformer are connected with the alternating-current ends of the second bridge circuit Q2, and the direct-current ends of the second bridge circuit Q2 are connected with the third direct-current capacitor C3 in parallel. The third direct-current capacitors C3 of each isolation conversion units 7 are connected in parallel, as shown in Fig. 10; alternatively, they may be grouped and connected in parallel by phase.

According to some embodiments, the rated power of the first bridge circuit Q1 is equal to that of the second bridge circuit Q2. Both the first bridge circuit Q1 and the second bridge circuit Q2 utilize high-frequency modulation for their power semiconductor devices, and the switching frequency of the power semiconductor devices is greater than or equal to 5 kHz.

According to an exemplary embodiment, the energy supply unit comprises at least one low-voltage direct-current power source 8. Each low-voltage direct-current power source 8 comprises a step-down transformer T3 and a rectifier bridge 9. A primary side of each step-down transformer T3 is connected with the alternating-current power source 8, and a secondary side is connected with an alternating-current input end of the rectifier bridge 9. Fig. 11 is a diagram of the rectifier bridge 9, which comprises six diodes arranged in the order of conduction.

According to some embodiments, when the energy supply unit comprises a low-voltage direct-current power source 8, the direct-current output ends of the rectifier bridge 9 are connected in parallel to the third direct-current capacitors C3 of each isolation conversion units 7. When the energy supply unit comprises three low-voltage direct-current power sources 8, the third direct-current capacitors C3 of the isolation conversion units 7 are connected in parallel by phase, with the rectifier bridges 9 of each low-voltage direct-current power source 8 respectively connected with the third direct-current capacitors C3 of a corresponding isolation conversion units 7.

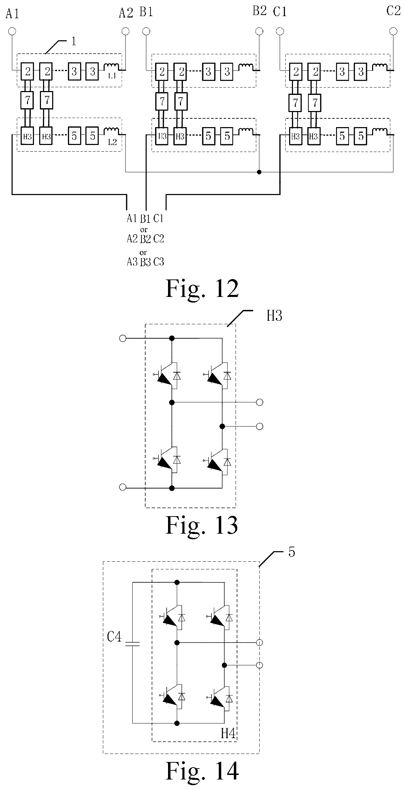

Fig. 12 shows yet another embodiment of an exemplary diagram of a flexible alternating-current interconnection apparatus.

As shown in Fig. 12, the energy supply unit comprises 3N isolation conversion units 7, and each of the isolation conversion units 7 is connected with one of the power balance sub-modules 2; and each of the isolation conversion units 7 comprises a high-frequency transformer T2, a second bridge circuit Q2, and a third direct-current capacitor C3, a primary side of the high-frequency transformer T2 is connected with the alternating-current end of the first bridge circuit Q1, a secondary side is connected with an alternating-current end of the second bridge circuit Q2, and a direct-current end of the second bridge circuit Q2 is connected in parallel to the third direct-current capacitor C3.

According to an exemplary embodiment, the energy supply unit further comprisesthe energy supply converter chains for three phases, the energy supply converter chain for each phase comprises K second-type full-bridge sub-modules 5 and N third full-bridge circuits H3, and K is an integer greater than or equal to 0. Each second-type full-bridge sub-module 5 comprises a fourth direct-current capacitor C4 and a fourth full-bridge circuit H4, and the fourth direct-current capacitor C4 is connected in parallel to the direct-current ends of the fourth full-bridge circuit H4, as shown in Fig. 14. Fig. 13 is a topology diagram of the third full-bridge circuits H3. The alternating-current ends of the third full-bridge circuits H3 in the energy supply converter chain for each phase are connected in series to the alternating-current ends of the fourth full-bridge circuits H4.

According to an exemplary embodiment, the energy supply converter chains for three phases are connected with the alternating-current power source in a star or delta configuration. In this embodiment, the energy supply converter chains for three phases are connected in a star configuration, meaning one ends of the energy supply converter chains for three phases are led out to connect to ABC phases of the alternating-current power source, while the other ends of the energy supply converter chains for three phases are connected.

According to an exemplary embodiment, each third full-bridge circuits H3 has a direct-current end connected with the third direct-current capacitor C3 of one corresponding isolation conversion units 7.

Fig. 15 is an overall diagram of a flexible alternating-current interconnection apparatus according to an exemplary embodiment.

As shown in Fig. 15, the energy supply unit of the flexible alternating-current interconnection apparatus can draw energy from various types of power sources, and the method of energy extraction can be switched.

According to an exemplary embodiment, the flexible alternating-current interconnection apparatus further comprises a control unit, which is not shown in the figure, for detecting the voltage and current of the flexible alternating-current interconnection apparatus and controlling the switching of the power semiconductor devices.

The present application further provides a startup control method for the flexible alternating-current interconnection apparatus, comprising:

S1, starting the energy supply unit after the control unit sends a startup command to the energy supply unit, so that a direct-current voltage of the third direct-current capacitor of the isolation conversion units is above a first startup threshold;

S2, where the direct-current voltage of the third direct-current capacitor of the isolation conversion units is above the first startup threshold, unlocking the power semiconductor device in the isolation conversion units for operation to control the second full-bridge circuit of the power balance sub-module to output an alternating-current voltage, so that a voltage of the first direct-current capacitor of the first-type full-bridge sub-module reaches a second startup threshold; and

S3, where the voltage of the first direct-current capacitor of the first-type full-bridge sub-module reaches the second startup threshold, unlocking the power semiconductor device in the first-type full-bridge sub-module for operation.

According to an exemplary embodiment, the first startup threshold and the second startup threshold are set based on the third direct-current capacitor and the first direct-current capacitor.

According to some embodiments, where the flexible alternating-current interconnection apparatus is connected between two alternating-current grids and the energy supply unit comprises energy supply converter chains for three phases, starting the energy supply unit in the above startup control method involves the following two situations:

1. where an alternating-current power source connected with an end of the supply converter chains for three phases is energized first, during the startup of the energy supply unit, the energized alternating-current grid directly charges the second-type full-bridge sub-module and the third direct-current capacitor in the third full-bridge circuits; and

2. where an alternating-current power source not connected with an end of the energy supply converter chains for three phases is energized first, during the startup of the energy supply unit, by the energized alternating-current grid simultaneously charges the second direct-current capacitor of the power balance sub-module, the first direct-current capacitor of the first-type full-bridge sub-module, the fourth direct-current capacitor of the second-type full-bridge sub-module, and the third full-bridge circuits.

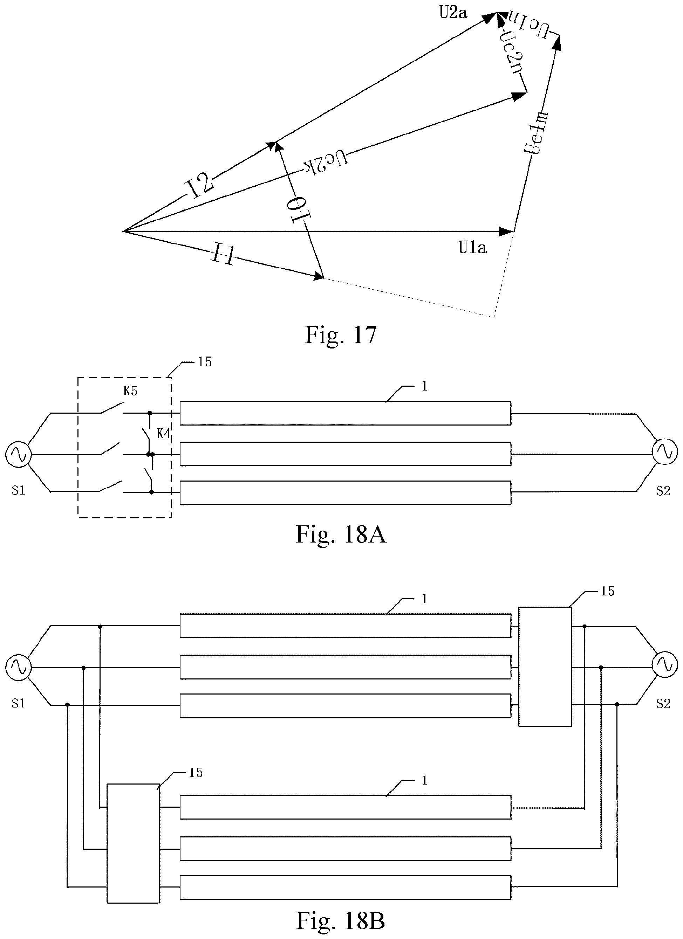

The specific implementation of the application will be illustrated by assuming that the energy supply unit comprises the energy supply converter chains for three phases. The flexible alternating-current interconnection apparatus is connected between a first alternating-current power source S1 and a second alternating-current power source S2, and a shift switch K2 is toggled to a state where one ends of the energy supply converter chains are connected with the second alternating-current power source. By substituting the detailed topology of each module in Fig. 12 into the block diagram, a topology as shown in Fig. 16 is formed. The corresponding voltage and current vector diagram is shown in Fig. 17. Here, U1a represents the voltage of the first alternating-current power source, U2a represents the voltage of the second alternating-current power source, Uc1n is the voltage across N power balance sub-modules connected in series at their alternating-current ends, Uc1m is the voltage across M first-type full-bridge sub-modules connected in series at their alternating-current ends, Uc2k is the voltage across K second-type full-bridge sub-modules of the energy supply converter chains connected in series at their alternating-current ends, and Uc2k is the voltage across N third full-bridge circuits connected in series at their alternating-current ends. I1 represents the current of the interconnection converter chain, I2 represents the total current flowing into the second alternating-current power source, and I0 represents the current of the energy supply converter chain. According to the vector diagram in Fig. 17, U1a and U2a are fixed voltages, and by adjusting Uc1n, Uc1m, Uc2k, and Uc2k, the magnitude and direction of the current between the two alternating-current power sources I1 and I2 can be indirectly adjusted, thus realizing flexible interconnection.

According to the flexible alternating-current interconnection apparatus and the startup control method, the flexible alternating-current interconnection apparatus is connected between two alternating-current power sources, which originate from power systems in the same or nearby regions. The phase angle and magnitude differences between the two power sources are small. By adjusting the output voltage of the flexible alternating-current interconnection apparatus, the magnitude and phase of the voltage applied across the reactor can be altered, resulting in adjustable current in the reactor and enabling flexible control of transmission power between the two alternating-current power sources. Additionally, due to the small voltage difference between the two power sources, the actual equipment operates under lower voltage, leading to significant advantages in operational losses, equipment footprint, and overall costs.

This application further provides an embodiment for decoupled bidirectional reactive power compensation.

The flexible alternating-current interconnection apparatus further comprises a dynamic reactive power compensation unit which is connected with the first alternating-current grid S1, or to the secondary winding of the first isolation transformer T1, or to the third winding of the first isolation transformer T1; or to the second alternating-current grid S2, or to the secondary winding of the second isolation transformer T2, or to the third winding of the second isolation transformer T2.

According to some embodiments, the dynamic reactive power compensation unit may inject reactive power into a connection point.

According to some embodiments, the dynamic reactive power compensation unit employs a cascaded SVG or a static var compensator (SVC), with either SVG or SVC connected with a flexible alternating-current closed-loop apparatus in a star or delta configuration. Assuming that the angle between two ends of the flexible alternating-current closed-loop apparatus S1A, S1B, S1C and S2A, S2B, S2C is 0°, the phase voltages at ports S1A, S1B, S1C and S2A, S2B, S2C are U1 and U2 respectively, and the ports S1A, S1B, S1C are set to transmit capacitive reactive power $Q1 = 3 * U1 * Ic$ (where Ic is the effective current flowing through the converter chain), then the ports S2A, S2B, S2C are forced to transmit $Q2 = 3 * U2 * Ic$. The dynamic reactive power compensation unit may compensate for Q2, achieving independent decoupling of the reactive power at the ports S2A, S2B, S2C.

The application further provides an embodiment of a flexible alternating-current closed-loop apparatus used in conjunction with a SVG.

Fig. 18A is a topology diagram of a flexible alternating-current closed-loop apparatus combined with a SVG according to an exemplary embodiment.

As shown in Fig. 18A, the flexible alternating-current closed-loop apparatus further comprises one or two sets of shift switch units 15. Each set of shift switch units 15 comprises two inter-phase switches K4 and a three-phase isolating switch K5, the three-phase isolating switch K5 is connected in series between the converter chains 1 and the first alternating-current grid S1 or the second alternating-current grid S2, and the inter-phase switches K4 are connected between ports of different phases of the three-phase isolating switch K5, on the same side near the converter chains 1. Each set of shift switch units 15 comprises two inter-phase switches K4 which are connected with phases AB and BC respectively.

According to some embodiments, the inter-phase switch K4 and the three-phase isolating switch K5 cannot be closed simultaneously.

When K5 is closed and K4 is open, the flexible alternating-current closed-loop apparatus achieves the flexible alternating-current closed-loop functionality.

When K5 is open and K4 is closed, the flexible alternating-current closed-loop apparatus operates in SVG mode. Further, the multi-winding transformer TM can provide active support for the SVG, serving as a grid-forming converter.

Fig. 18B shows another embodiment of an exemplary topology diagram of a flexible alternating-current closed-loop apparatus combined with a SVG.

As shown in Fig. 18B, the flexible alternating-current closed-loop apparatus comprises two sets of three-phase converter chains 1 connected in parallel, with each set of three-phase converter chains 1 being connected in series to a set of shift switch units 15, and the shift switch units 15 are arranged on different sides of the two sets of three-phase converter chains 1.

According to some embodiments, the flexible alternating-current closed-loop apparatus may function as an SVG for two separate alternating-current grids, or operate as two parallel flexible alternating-current closed-loop apparatuses, or function as a single flexible alternating-current closed-loop apparatus operating in conjunction with an SVG.

It should be clearly understood that this application describes how to form and use specific examples, but this application is not limited to any details of these examples. On the contrary, based on the teachings of the disclosure, these principles can be applied to many other embodiments.

In addition, it should be noted that the above drawings are only illustrations of the processes included in the method according to the exemplary embodiments of the application, and are not for limiting purposes. It is easy to understand that the processes shown in the above figures do not indicate or limit the time sequence of these processes. In addition, it is further easy to understand that these processes can be performed synchronously or asynchronously in multiple modules, for example.

Exemplary embodiments of the application have been particularly shown and described above. It should be understood that this application is not limited to the detailed structure, arrangement or implementation described here; on the contrary, this application is intended to cover various modifications and equivalent arrangements included within the spirit and scope of the appended claims.

**Claims**

1. A flexible alternating-current interconnection apparatus, comprising: interconnection converter chains for three phases, and an energy supply unit, the interconnection converter chain for each phase comprising N power balance sub-modules, M first-type full-bridge sub-modules and a reactor, N being an integer greater than or equal to 1, and M being an integer greater than or equal to 0, wherein

   each of the power balance sub-module comprises a second full-bridge circuit, a second direct-current capacitor and a first bridge circuit, and the direct-current ends of the second full-bridge circuit, the second direct-current capacitor and the direct-current ends of the first bridge circuit are connected in parallel;
   each of the first-type full-bridge sub-module comprises a first direct-current capacitor and a first full-bridge circuit, and the direct-current ends of the first full-bridge circuit are connected with the first direct-current capacitor in parallel;
   the alternating-current ends of the first bridge circuits in the interconnection converter chain for each phase are connected with the energy supply unit, such that the energy supply unit performs a power exchange with the power balance sub-modules in the interconnection converter chain for each phase;
   where M is 0, the alternating-current ends of the second full-bridge circuits in the interconnection converter chain for each phase are connected with the reactor in series to form a series branch;
   where M is greater than 0, the alternating-current ends of the second full-bridge circuits in the interconnection converter chain for each phase and the alternating-current ends of the first full-bridge circuits thereof are connected with the reactor in series to form a series branch; and
   an end of the series branch is connected with a first alternating-current power grid, and another end of the series branch is connected with a second alternating-current power grid.

2. The apparatus according to claim 1, wherein the energy supply unit comprises at least one multi-winding transformer, a primary winding of the multi-winding transformer is connected with an alternating-current power source, a secondary winding of the multi-winding transformer is connected with the alternating-current ends of the first bridge circuits of the interconnection converter chain for each phase, and a total number of the secondary windings of the multi-winding transformer is 3N.

3. The apparatus according to claim 1, wherein the energy supply unit comprises 3N isolation conversion units, each of the isolation conversion units is connected with one of the power balance sub-modules, each of the isolation conversion units comprises a high-frequency transformer, a second bridge circuit, and a third direct-current capacitor, primary sides of the high-frequency transformer are connected with the alternating-current ends of the first bridge circuit, secondary sides of the high-frequency transformer are connected with the alternating-current ends of the second bridge circuit, and the direct-current ends of the second bridge circuit are connected with the third direct-current capacitor in parallel.

4. The apparatus according to claim 3, wherein the energy supply unit comprises at least one low-voltage direct-current power source, and direct-current output ends of the low-voltage direct-current power source are connected with the third direct-current capacitors of the isolation conversion units in parallel, respectively.

5. The apparatus according to claim 3, wherein the energy supply unit further comprises energy supply converter chains for three phases, the energy supply converter chain for each phase comprises N third full-bridge circuits and K second-type full-bridge sub-modules, and K is an integer greater than or equal to 0;

the energy supply converter chains for three phases are connected with an alternating-current power source in a star or delta configuration;
each of the second-type full-bridge sub-modules comprises a fourth direct-current capacitor and a fourth full-bridge circuit, and the fourth direct-current capacitor is connected with direct-current ends of the fourth full-bridge circuit in parallel;
the alternating-current ends of the third full-bridge circuits of the energy supply converter chain for each phase are connected with the alternating-current ends of the fourth full-bridge circuits in series; and
each of the third full-bridge circuits has a direct-current end connected with the third direct-current capacitor of a corresponding isolation conversion unit.

6. The apparatus according to claim 2, wherein alternating-current switches are required to connect the energy supply unit with both the first alternating-current grid and the second alternating-current grid;

the multi-winding transformer comprises at least one primary winding, the primary winding of the multi-winding transformer is connected with the first alternating-current grid via a first alternating-current switch, and the primary winding is connected with the second alternating-current grid via a second alternating-current switch; and the first alternating-current switch connected with the first alternating-current grid and the second alternating-current switch connected with the second alternating-current grid are not allowed to be closed at a same time.

7. The apparatus according to claim 1, wherein the first bridge circuit comprises a single-phase full-bridge circuit or a three-phase half-bridge circuit.

8. The apparatus according to claim 1, wherein any one of the interconnection converter chains for three phases is connected with a short-circuit switch in parallel; and/or the alternating-current ends of any one of the N power balance sub-modules are connected with a bypass switch in parallel.

9. The apparatus according to claim 1, further comprising an overvoltage protection apparatus, connected between two ends of a series branch of the first-type full-bridge sub-module and the power balance sub-module of the interconnection converter chain for each phase in parallel, and/or between either end and ground in series.

10. The apparatus according to claim 1, wherein a number of the power balance sub-modules required for the flexible alternating-current interconnection apparatus is determined as follows:

$$N \geq \sqrt{2}\frac{\sqrt{U_1^2 + U_2^2 - 2U_1U_2\cos\gamma}}{U_{dc}};$$

$$N \geq \frac{Max(\sqrt{2}U_1, \sqrt{2}U2)}{U_{dc}};$$

where $U_{gc}$ is a rated direct-current voltage of the power balance sub-module; $U_1$ is an effective value of a phase voltage at an end of the interconnection converter chains for three phases; $U_2$ is an effective value of a phase voltage at another end of the interconnection converter chains for three phases; and $\gamma$ is a phase angle difference between $U_1$ and $U_2$.

11. The apparatus according to claim 1 or 3 or 5, further comprising a shift switch unit, wherein

the shift switch unit comprises a three-phase isolating switch and two inter-phase switches;
the three-phase isolating switch is connected between the interconnection converter chains for three phases and the first alternating-current grid in series, or between the interconnection converter chains for three phases and the second alternating-current grid in series; and
the two inter-phase switches are connected between the three-phase isolating switch and same-side ports of the interconnection converter chains for three phases, and the two inter-phase switches are bridged across the interconnection converter chains for different phases.

12. A startup control method for the apparatus according to any one of claims 3-5, comprising:

starting the energy supply unit so that a direct-current voltage of the third direct-current capacitor of the isolation conversion unit is above a first startup threshold;
where the direct-current voltage of the third direct-current capacitor of the isolation conversion units is above the first startup threshold, unlocking a power semiconductor device in the isolation conversion units for operation to control the second full-bridge circuit of the power balance sub-module to output an alternating-current voltage, so that a voltage of the first direct-current capacitor of the first-type full-bridge sub-module reaches a second startup threshold; and
where the voltage of the first direct-current capacitor of the first-type full-bridge sub-module reaches the second startup threshold, unlocking a power semiconductor device in the first-type full-bridge sub-module for operation.

13. The method according to claim 12, wherein where the flexible alternating-current interconnection apparatus is connected between two alternating-current grids and the energy supply unit comprises energy supply converter chains for three phases, starting the energy supply unit comprises:

where an alternating-current power source connected with an end of the energy supply converter chains for three phases is energized first, during startup of the energy supply unit, the energized alternating-current grid directly charges the second-type full-bridge sub-module and the third direct-current capacitor in the third full-bridge circuits; and
where an alternating-current power source not connected with an end of the energy supply converter chains for three phases is energized first, during startup of the energy supply unit, the energized alternating-current grid simultaneously charges the second direct-current capacitor of the power balance sub-module, the first direct-current capacitor of the first-type full-bridge sub-module, the fourth direct-current capacitor of the second-type full-bridge sub-module, and the third full-bridge circuits.

Fig. 1

Fig. 2

Fig. 3A

Fig. 3B

Fig. 4A

S3

TM

S1
or
S2

Fig. 4B

TM

S1
or
S2

T1 or
T2

Fig. 4C

TM

Fig. 4D

Fig. 5A

Fig. 5B

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18A

Fig. 18B

**INTERNATIONAL SEARCH REPORT**

| International application No. |
| --- |
| **PCT/CN2023/119724** |

**A.     CLASSIFICATION OF SUBJECT MATTER**

H02J3/00(2006.01)i;  H02J3/06(2006.01)i

According to International Patent Classification (IPC) or to both national classification and IPC

**B.     FIELDS SEARCHED**

Minimum documentation searched (classification system followed by classification symbols)

    H02J

Documentation searched other than minimum documentation to the extent that such documents are included in the fields searched

Electronic data base consulted during the international search (name of data base and, where practicable, search terms used)

    CNTXT; ENTXT; ENTXTC; WPABS; CJFD: 换流链, 合环, 互联, 交流, 全桥, 短路, 旁路, 隔离, 开关, 柔性, 背靠背, flexible, loop, switch, bypass, partition, full bridge, connection, chain

**C.     DOCUMENTS CONSIDERED TO BE RELEVANT**

| Category* | Citation of document, with indication, where appropriate, of the relevant passages | Relevant to claim No. |
| --- | --- | --- |
| PX | CN 115483683 A (NR ELECTRIC CO., LTD. et al.) 16 December 2022 (2022-12-16) <br> claims 1-18 | 8, 10-11 |
| PX | CN 116093946 A (NR ELECTRIC CO., LTD. et al.) 09 May 2023 (2023-05-09) <br> claims 1-14 | 1-7, 9, 12-13 |
| A | CN 114094576 A (NR ELECTRIC CO., LTD. et al.) 25 February 2022 (2022-02-25) <br> description, paragraphs 88-139, and figures 1-7 | 1-13 |
| A | CN 113270864 A (BEIJING JINGTOU TIANXIN POWER ELECTRONICS CO., LTD.) 17 August 2021 (2021-08-17) <br> entire document | 1-13 |
| A | CN 113452070 A (YANSHAN UNIVERSITY) 28 September 2021 (2021-09-28) <br> entire document | 1-13 |
| A | CN 202042945 U (SHANGHAI MUNICIPAL ELECTRIC POWER COMPANY et al.) 16 November 2011 (2011-11-16) <br> entire document | 1-13 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 November 2023** | **23 November 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/119724**

| C. | DOCUMENTS CONSIDERED TO BE RELEVANT | |
|---|---|---|
| Category* | Citation of document, with indication, where appropriate, of the relevant passages | Relevant to claim No. |
| A | WO 2021159873 A1 (NANJING NR ELECTRIC CO., LTD. et al.) 19 August 2021 (2021-08-19) <br> entire document | 1-13 |

Form PCT/ISA/210 (second sheet) (July 2022)

INTERNATIONAL SEARCH REPORT
Information on patent family members

International application No.

**PCT/CN2023/119724**

| Patent document cited in search report | | | Publication date (day/month/year) | Patent family member(s) | | | Publication date (day/month/year) |
|---|---|---|---|---|---|---|---|
| CN | 115483683 | A | 16 December 2022 | None | | | |
| CN | 116093946 | A | 09 May 2023 | None | | | |
| CN | 114094576 | A | 25 February 2022 | None | | | |
| CN | 113270864 | A | 17 August 2021 | CN | 215452515 | U | 07 January 2022 |
| CN | 113452070 | A | 28 September 2021 | CN | 113452070 | B | 11 October 2022 |
| CN | 202042945 | U | 16 November 2011 | None | | | |
| WO | 2021159873 | A1 | 19 August 2021 | CN | 113258794 | B | 22 July 2022 |
| | | | | CN | 113258794 | A | 13 August 2021 |

Form PCT/ISA/210 (patent family annex) (July 2022)